(19) Europäisches Patentamt
European Patent Office
Office européen des brevets

(11) Publication number: **0 290 453 B1**

(12) # EUROPEAN PATENT SPECIFICATION

(45) Date of publication of patent specification :
**15.05.91 Bulletin 91/20**

(51) Int. Cl.⁵ : **A01G 13/04**

(21) Application number : **87900861.3**

(22) Date of filing : **26.01.87**

(86) International application number :
**PCT/GB87/00044**

(87) International publication number :
**WO 87/04897 27.08.87 Gazette 87/19**

(54) **IMPROVEMENTS RELATING TO PLANT SHELTERS.**

(30) Priority : **15.02.86 GB 8603803**
**22.04.86 GB 8609837**

(43) Date of publication of application :
**17.11.88 Bulletin 88/46**

(45) Publication of the grant of the patent :
**15.05.91 Bulletin 91/20**

(84) Designated Contracting States :
**BE DE FR LU**

(56) References cited :
**BE-A- 555 729**
**GB-A- 1 507 052**

(56) References cited :
**GB-A- 1 580 039**
**GB-A- 1 604 846**
**GB-A- 1 879 813**
**GB-A- 2 129 664**
**US-A- 2 753 662**

(73) Proprietor : **HOLLADAY, David George**
**71 Sunnyfield Mill Hill**
**London NW7 4RE (GB)**

(72) Inventor : **HOLLADAY, David George**
**71 Sunnyfield Mill Hill**
**London NW7 4RE (GB)**

(74) Representative : **Sommerville, John Henry et al**
**SOMMERVILLE & RUSHTON 11 Holywell Hill**
**St. Albans Hertfordshire, AL1 1EZ (GB)**

## Description

The invention relates to shelters for plants. Plant shelters are well known devices manufactured from transparent or translucent plastics material and form a total or partial enclosure around plants in order to promote plant growth and provide protection. In one well known form, the plant shelter comprises a tube which is vertically arranged around an individual tree ("Tuley Tube") or vine and attached to a stake driven into the ground.

The attachment arrangements known to date for the enclosures of such plant shelters are based on relatively time consuming methods and/or the use of special tools. This is particularly true when the enclosure is to be transported as a flat sheet for on-site assembly and when the use of metal parts (wire, staples) is inadvisable. Additional problems with existing methods of attachment are the difficulty in dismantling the enclosure, in extending the enclosure at a later date, and in adjusting the position of the enclosure.

One known arrangement of plant shelter, which is described in UK-PS-1580039 comprises at least one stake adapted to be supported vertically above the ground and an enclosure which, in turn, is adapted to be supported by at least one said stake, the or each stake having at least one longitudinally extending slot therein and the enclosure comprising at least one section of material, preferably transparent or translucent plastics material, the arrangement being such that the or each said section is attachable to, or removable from, an associated stake by sliding a vertical edge of the section into a respective slot. However, this known arrangement is essentially for a cloche to cover rows of plants by providing elongate straight side walls and a roof sheet.

An object of the present invention is to provide a plant shelter generally of this kind which can be easily and quickly attached to and removed from one or more stakes, and which is suitable for any type of plant, any shape of enclosure, any number of stakes and any number of plants without the necessity that they are in rows.

According to this invention such a plant shelter arrangement is characterised in that the or each section is substantially rectangular and can be curved or bent so as to extend, in plan, at least partially around a plant or plants, and in that the or each said section is supported by sliding respective vertical edges or a fold of the material in the slot of an associated stake.

Only one section of material may be provided comprising a flat sheet which is sufficiently flexible to be curved so as to completely encircle a plant or plants, in which case said sheet is attached to a single associated stake by sliding opposed vertical edges into slot of said stake. Alternatively, said section of material may be of tubular form and be sufficiently flexible that a fold can be made in the tube wall which is retained by a slot of an associated stake.

The material can be more rigid, in which case a sheet of the material is sharply bent along appropriate lines so as to be of polygonal cross-section to encircle a plant or plants, eg triangular or rectangular. In a preferred form the more rigid sheet comprises faced corrugated plastics material which is sharply bent along appropriate corrugations, which are arranged vertically in use of the sheet.

Preferably, each stake is tubular with one slot opening into the tube bore. Also, vertical edges of the sheets which are to be attached to a stake may be thickened, eg by doubling over the edge like a hem, so that they can be positively retained behind an associated slot.

Each stake may be manufactured from a hollow tube of constant internal and external diameter, with the slot formed by cutting through the wall over the length of the tube, or as a solid extrusion with one or more preformed slots and, if desired, internal or external reinforcement arrangements.

The external reinforcement arrangements may take the form of an uneven surface to improve the stability of the stake in the ground.

In another form, each stake may comprise an elongated plastics member which defines said slot and which is adapted to be fixed along its length to an already existing stake, eg of wood or metal.

In another form, each stake may be manufactured by rolling or bending a flat metal sheet (eg steel) into a tube, the longitudinal edges of which are spaced apart to define a slot.

To facilitate location of the enclosure material into a slot, preferably the intended upper end of the slot widens out.

To facilitate penetration into the ground, each stake has its base end in the form of a spike, or the like.

The enclosure may also assume the cross section of a droplet of water.

Specific embodiments of the invention will now be described, by the way of example, with reference to the accompanying drawings in which :

Figure 1 shows in perspective a first embodiment of the invention,

Figure 2 shows in perspective a second embodiment of the invention,

Figure 3 shows in perspective a third embodiment of the invention,

Figure 4 shows in perspective a fourth embodiment of the invention, and

Figure 5 shows in enlarged cut-away perspective of a fifth embodiment of the invention.

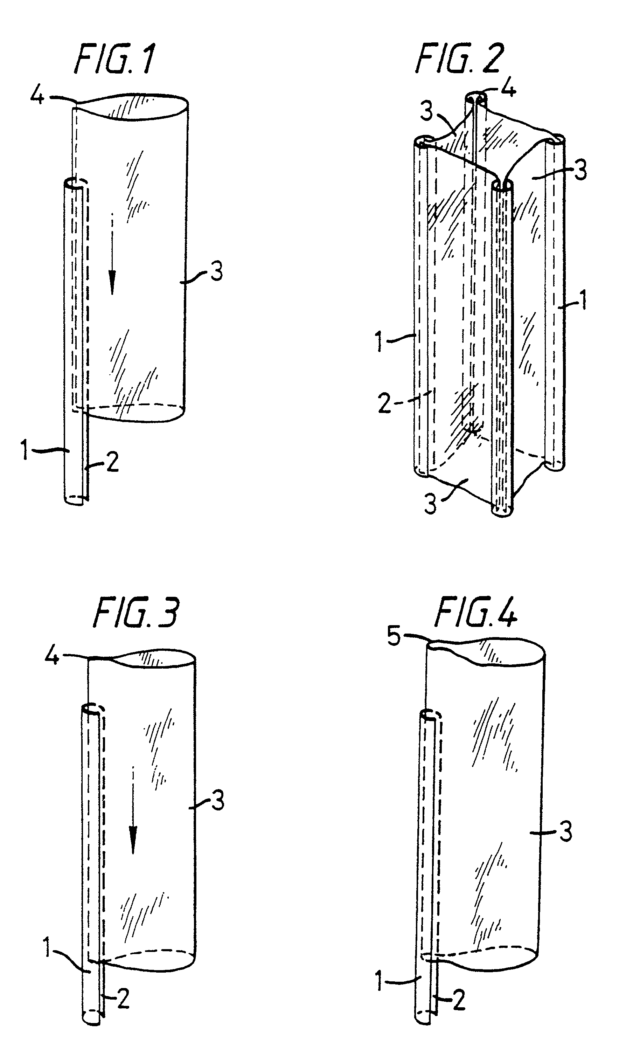

Referring to Figure 1 in the first embodiment, a single stake is used comprising a plastics tube 1 with a full length longitudinal slot 2 opening into the bore of the tube. The tube is arranged externally of the enclosure and holds opposed edges 4 of a single sheet 3 of the enclosure material, which edges are secured to the stake by sliding in the direction shown by the arrow. The edges 4 are doubled over to thicken them so that they will positively engage behind the slot 2. In this embodiment, the enclosure material is sufficiently thick to provide some stiffness to its flexibility, so that it is self-supporting around the plant with the aid of the stake. It will be appreciated that the stake could also be arranged internally of the enclosure.

Referring to Figure 2, in the second embodiment, several tubular stakes 1 are used, each with full length longitudinal slots 2, holding in position separate sheets of enclosure material 3, adjacent sheets being held in position by adjacent thickened, raised edges 4 engaged behind the slot(s) of one stake. As shown, four stakes are provided, which would be circled around a plant or plants. It will be appreciated that, because of the greater support provided by the number of stakes, the enclosure material need not be so stiff as in the first embodiment.

Referring to Figure 3, in the third embodiment, a single stake 1 is used with a preformed enclosure 3 which is tubular in cross-section and has a web providing an edge 4, the latter being secured to the stake by sliding it in the direction shown by the arrow into and behind the slot 2.

Referring to Figure 4, in the fourth embodiment, a single stake 1 is again used with a preformed tubular enclosure 3. The tubular enclosure 3 is secured to the stake by sliding a longitudinally extending fold 5 of the material in the direction shown by the arrow into and behind the slot 2.

It will be appreciated that, where the enclosure is preformed as a tube, it can be made of relatively flexible material, in which case it may need to be supported by sliding a number of folds of material onto stakes arranged around the plant or plants. If the enclosure is made relatively stiff, only one stake may be needed. It will also be appreciated that the preformed tube could be of circular, oval, rectangular, or any other suitable cross-section.

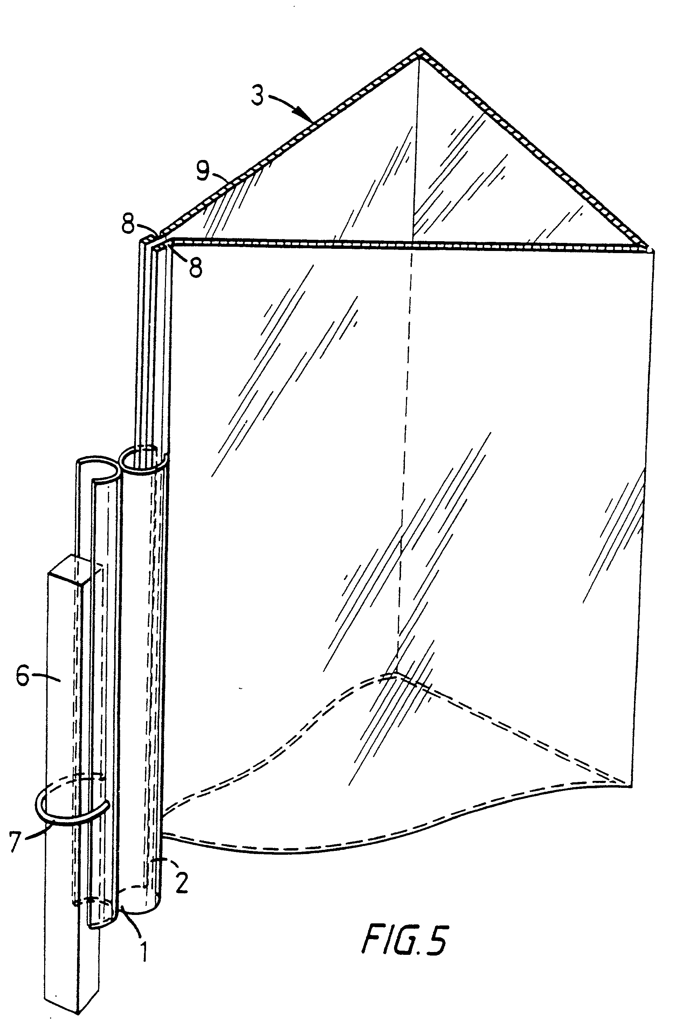

Referring to Figure 5, in the fifth embodiment, a stake is used comprising a plastics tube 1 with a full length longitudinal slot 2 opening into the bore of the tube. The tube 1 is held against a conventional stake 6 of wood or any other suitable rigid material by means of strap(s) or clip(s) 7. In this embodiment the enclosure material is made from flat faced corrugated plastic material 9, is a corrugated inner layer which is faced on each side with a sheet, which, due to the rigidity provided by the corrugations, is used with the corrugations extending vertically, and is shaped by sharply bending it along appropriate corrugations, to provide an enclosure which is polygonal in cross-section, eg triangular as shown. Along the parts 8 of the enclosure 3 to be retained in the slot 2, the enclosure is suitably modified by reducing the thickness of the material, to provide longitudinal slots close to the two vertical edges of the enclosure to which the edges of the slot 2 of the tube 1 can positively locate.

It will be appreciated that the enclosure could be of any flat sided shape, also that this enclosure could be installed in conjunction with any of the other designs of stake. It will also be appreciated that tube 1 need not extend to the full length of the enclosure 3, nor need it extend to the full length of the conventional stake 6.

Modifications are possible within the scope of the invention. For example, the slot could be shaped with side walls which are adapted to bear against the part of parts of the enclosure member fixed into said slot, thereby providing further rigidity for the enclosure member. It will be appreciated that in this case the enclosure member would be manufactured as a special extrusion, in which case it may be formed with two separate slots in order to separately hold the two edges of an enclosure.

Also, if the stake is installed such that it is shorter than the enclosure, the top of the enclosure may be held closed by means of a clip or a short section of stake cut for the purpose.

In another modification, ths stake could be required only to close the shelter around the plant, in which case it may not need to be driven into the ground, but supported vertically by some other means.

## Claims

1. A plant shelter comprising at least one stake (1) adapted to be supported vertically above the ground and an enclosure which, in turn, is adapted to be supported vertically by at least one said stake, the or each stake (1) having at least one longitudinally extending slot (2) therein, and the enclosure comprising at least one section (3) of material, the arrangement being such that the or each said section is attachable to, or removable from, an associated stake by sliding a vertical edge (4) of the section into a respective slot, characterised in that the or each section (3) is substantially rectangular and can be curved or bent so as to extend, in plan, at least partially around a plant or plants, and in that the or each said section is supported by sliding respective vertical edges (4) or a fold of the material in a slot (2) of an associated stake (1).

2. A plant shelter according to Claim 1, characterised in that only one section of material (3) is provided in the form of a flat sheet which is sufficiently flexible to be curved so as to completely encircle a plant or plants, said sheet being attached to a single associated stake (1) by sliding opposed vertical edges (4) into a slot (2) of said stake.

3. A plant shelter according to Claim 1, characterised in that only one section of material (3) is provided, of tubular form, and in that said material is sufficiently flexible that a fold (5) can be made in the tube wall which is retained by a slot (2) of an associated stake (1).

4. A plant shelter according to Claim 1, characterised in that said sheet is of a material which can be sharply bent along appropriate lines so as to be of polygonal cross-section to encircle a plant or plants.

5. A plant shelter according to Claim 4, characterised in that said sheet is of faced corrugated plastics material (9) and is sharply bent along appropriate corrugations.

6. A plant shelter according to any preceding Claim, characterised in that each stake (1) is tubular with one slot (2) opening into the tube bore.

7. A plant shelter according to Claim 6 when dependent of Claim 1, 2, 4 or 5, characterised in that said vertical edges (4) of the sheet or sheets to be attached to a stake are thickened so that they can be positively retained behind the slot.

8. A plant shelter according to Claim 6, characterised in that each stake (1) is formed from a hollow tube of constant internal and external diameter with the slot (2) formed by cutting through the wall over the length of the tube.

9. A plant shelter according to any preceding Claim, characterised in that each stake (1) is adapted to be driven into the ground and has an external reinforcement arrangement in the form of an uneven surface to improve the stability of the stake in the ground.

10. A plant shelter according to any one of Claims 1 to 8, characterised in that each stake comprises an elongated plastics member which defines said slot (2) and which is adapted to be fixed along its length to an already existing stake (6).

11. A plant shelter according to any one of Claims 1 to 8, characterised in that each stake is of metal and is formed by rolling or bending a flat metal sheet into a tube, the longitudinal edges of which are spaced apart to define a slot (2).

12. A plant shelter according to any preceding Claim, characterised in that, at the intended upper end of each stake (1), the or each of its slots widens out to facilitate insertion of the enclosure material.

**Ansprüche**

1. Pflanzen-Schutzhülle, die wenigstens einen Pfahl (1) aufweist und vertikal oberhalb des Bodens getragen ist, und mit einer Umhüllung, die ihrerseits vertikal von wenigstens einem der genannten Pfähle getragen ist, wobei der einzelne Pfahl (1) wenigstens eine sich in Längsrichtung erstreckende Nut (2) aufweist und wobei die Umhüllung wenigstens einen Abschnitt (3) aus Material umfaßt, mit einer solchen Anordnung, daß der einzelne Abschnitt an einem zugeordneten Pfahl befestigbar und von diesem wieder abnehmbar ist, und zwar durch Einschieben einer vertikalen Kante (4) des Abschnittes in eine entsprechende Nut, dadurch gekennzeichnet, daß der einzelne Abschnitt (3) im wesentlichen rechtwinklig ist und gekrümmt werden kann, um in der Draufsicht wenigstens teilweise die Pflanze oder die Pflanzen zu umgeben, und daß der einzelne Abschnitt durch Einschieben entsprechender vertikaler Kante (4) oder eines Falzes des Materiales in eine Nut (2) eines zugehörenden Pfahles (1) getragen ist.

2. Pflanzenschutzhülle nach Anspruch 1, dadurch gekennzeichnet, daß lediglich ein Abschnitt des Materiales (3) in Gestalt einer flachen Folie vorliegt, die genügend flexibel ist, um derart gekrümmt zu werden, daß sie die Pflanze oder die Pflanzen vollständig einhüllt, und daß die Folie durch Einschieben einander gegenüberliegender vertikaler Kanten (4) in eine Nut des genannten Pfahles an einem einzigen zugeordneten Pfahl (1) befestigt wird.

3. Pflanzenschutzhülle nach Anspruch 1, dadurch gekennzeichnet, daß lediglich ein Abschnitt des Materiales (3) von Hülsenform vorgesehen ist, und daß das Material genügend flexibel ist, daß ein Falz (5) in der Wand der Hülse gebildet werden kann und von einer Nut (2) eines zugeordneten Pfahles (1) aufgenommen wird.

4. Pflanzenschutzhülle nach Anspruch 1, dadurch gekennzeichnet, daß die Folie aus Material besteht, das entlang geeigneter Linien scharf umgebogen werden kann, so daß zum Einhüllen einer Pflanze oder von Pflanzen ein polygonaler Querschnitt entsteht.

5. Pflanzenschutzhülle nach Anspruch 4, dadurch gekennzeichnet, daß die Folie aus Wellplastik (9) besteht und entlang entsprechender Wellen scharf umgebogen ist.

6. Pflanzenschutzhülle nach einem der vorausgegangenen Ansprüchen, dadurch gekennzeichnet, daß jeder Stapel (1) hülsenförmig ist und eine Nut (2) aufweist, die gegen die Hülsenbohrung hin offen ist.

7. Pflanzenschutzhülle nach Anspruch 6 in Abhängigkeit von den Ansprüchen 1, 2, 4 oder 5, dadurch gekennzeichnet, daß die vertikalen Kanten (4) der Folie oder der Folien, die an einem Pfahl zu befestigen sind, verdickt sind, so daß sie hinter der Nut zuverlässig festgehalten werden.

8. Pflanzenschutzhülle nach Anspruch 6, dadurch gekennzeichnet, daß jeder Pfahl (1) aus einer Hülse konstanten Innen- und Außendurchmessers gebildet ist, und daß die Nut durch Durchschneiden der Wand über die gesamte Hülsenlänge gebildet ist.

9. Pflanzenschutzhülle nach einem der vorausgegangenen Ansprüche, dadurch gekennzeichnet, daß jeder Pfahl (1) derart gestaltet ist, daß er in den Boden eingetrieben werden kann, und eine äußere Verstärkung in Gestalt einer unebenen Fläche aufweist, um die Stabilität des Pfahles im Boden zu erhöhen.

10. Pflanzenschutzhülle nach einem der Ansprüche 1-8, dadurch gekennzeichnet, daß jeder Pfahl ein langgestrecktes Plastikelement umfaßt, das die Nut (2) aufweist, und das derart gestaltet ist, daß es über seine Länge hinweg mit einem bereits vorhandenen Pfahl (6) fest verbunden wird.

11. Pflanzenschutzhülle nach einem der Ansprüche 1-8, dadurch gekennzeichnet, daß jeder Pfahl aus Metall besteht und durch Walzen oder Biegen eines flachen Metallbleches in eine Hülse hergestellt wird, deren Längskanten einen gegenseitigen Abstand aufweisen, um eine Nut (2) zu bilden.

12. Pflanzenschutzhülle nach einem der vorausgegangenen Ansprüche, dadurch gekennzeichnet, daß sich die einzelne Nut am vorgesehenen oberen Ende eines jeden Pfahles (1) erweitert, um das Einführen des Hüllenmateriales zu erleichtern.

## Revendications

1. Abri pour plante, comprenant au moins un piquet (1) agencé pour être supporté verticalement au-dessus du sol et une enveloppe qui est agencée pour être supportée verticalement par au moins un tel piquet, le ou chaque piquet (1) contenant au moins une fente longitudinale (2), et l'enveloppe comprenant au moins une pièce (3) de matière, l'agencement étant tel que la ou chaque pièce peut être fixée à, ou retirée d'un piquet correspondant par glissement d'un bord vertical (4) de la pièce dans une fente correspondante, caractérisé en ce que la ou chaque pièce (3) est sensiblement rectangulaire et peut être courbée ou cintrée de façon à s'étendre, en plan, au moins partiellement autour d'une ou plusieurs plantes, et en ce que la ou chaque pièce est supportée par insertion de bords verticaux respectifs (4) ou d'un pli de la matière dans une tente (2) d'un piquet correspondant (1).

2. Abri selon la revendication 1, caractérisé en ce qu'il comporte une seule pièce de matière (3), sous la forme d'une feuille plate et suffisamment flexible pour être courbée de façon à entourer complètement une ou plusieurs plantes, cette feuille étant fixée à un seul piquet correspondant (1) par insertion de ses bords verticaux opposés (4) dans une fente (2) du piquet.

3. Abri selon la revendication 1, caractérisé en ce qu'il comporte une seule pièce de matière (3) ayant une forme tubulaire, et en ce que ladite matière est suffisamment flexible pour que puisse être formé, dans la paroi tubulaire, un pli (5) qui est retenu par une fente (2) d'un piquet correspondant (1).

4. Abri selon la revendication 1, caractérisé en ce que ladite feuille est faite d'une matière qui peut être pliée à angle vif le long de lignes appropriées, pour avoir une section transversale polygonale de façon à entourer une ou plusieurs plantes.

5. Abri selon la revendication 4, caractérisé en ce que ladite feuille est en matière synthétique ondulée à couches superficielles (9) et est pliée a angle vif le long d'ondulations appropriées.

6. Abri selon l'une des revendications précédentes, caractérisé en ce que chaque piquet (1) est tubulaire et comporte une seule fente (2) débouchant dans l'alésage du tube.

7. Abri selon la revendication 6, dépendant elle-même de la revendication 1, 2, 4 ou 5, caractérisé en ce que lesdits bords verticaux (4) de la feuille ou des feuilles à fixer à un piquet sont épaissis de façon à pouvoir être retenus positivement derrière la fente.

8. Abri selon la revendication 6, caractérisé en ce que chaque piquet (1) est formé par un tube creux à diamètres intérieur et extérieur constants, la fente (2) étant formée par coupure de la paroi sur la longueur du tube.

9. Abri selon l'une des revendications précédentes, caractérisé en ce que chaque piquet (1) est agencé pour être planté dans le sol et comporte un renfort extérieur sous la forme d'une surface irrégulière pour augmenter la stabilité du piquet dans le sol.

10. Abri selon les revendications 1 à 8, caractérisé en ce que chaque piquet comprend un élément allongé en matière synthétique qui définit ladite fente (2) et qui est agencé pour être fixé, suivant sa longueur, à un piquet déjà existant (6).

11. Abri selon l'une des revendications 1 à 8, caractérisé en ce que chaque piquet est en métal et est formé par une tôle plate roulée ou cintrée en forme de tube, les bords longitudinaux de la tôle étant espacés l'un de l'autre de façon à définir une fente (2).

12. Abri selon l'une des revendications précédentes, caractérisé en ce qu'à l'extrémité supérieure de chaque piquet (1), la fente ou chaque fente est évasée pour faciliter l'insertion de la matière de l'enveloppe.

FIG.1

FIG.2

FIG.3

FIG.4

*FIG.5*